# EUROPÄISCHE PATENTSCHRIFT

(11) **EP 0 639 281 B1**
(45) Veröffentlichungstag und Bekanntmachung des Hinweises auf die Patenterteilung: **29.10.1997**
(21) Anmeldenummer: 93909855.4
(22) Anmeldetag: 30.04.1993
(51) Int. Cl.: G02C 5/22

(54) **KREUZFEDERGELENK FÜR BRILLENBÜGEL**
FLEXURAL PIVOT FOR SIDE-PIECES OF SPECTACLES
PIVOT A LAMES FLEXIBLES POUR BRANCHES DE LUNETTES

(30) Priorität: 05.05.1992 IT BL920003
(43) Veröffentlichungstag der Anmeldung: 22.02.1995
(73) Patentinhaber: PINOPTIK S.n.c. DI BAVARESCO G. CARLO, 32030 Quero (IT)
(72) Erfinder: BAVARESCO, Gian Carlo, I-32030 Quero (IT)
(74) Vertreter: Wablat, Wolfgang, Dr.Dr.
(86) Internationale Anmeldenummer: EP9301029
(87) Internationale Veröffentlichungsnummer: WO9322705

(56) Entgegenhaltungen:
- EP-A- 0 457 026
- WO-A-88/02870
- DE-A- 3 414 641
- GB-A- 735 923
- GB-A- 2 184 561
- US-A- 3 865 473
- US-A- 4 978 209

## Beschreibung

Die Erfindung betrifft ein Kreuzfedergelenk für Brillenbügel mit einer Gabelfeder und einem Gelenkstift

Ein Kreuzfedergelenk ist aus der US-A-4 978 209 bekannt und besteht aus einer jeweils an dem Brillenbügel angeordneten Gabelfeder und aus Gelenkstiften, die an den Gabelenden angeformt und in Ösen als Lagerstelle einsteckbar sind. Die Ösen sind jeweils in einem tragenden Element eingearbeitet, das Bestandteil der Brillenfassung ist, und das Einstecken der Gelenkstifte in die Ösen erfolgt über in das tragende Element eingearbeitete Nuten, die gleichzeitig als begrenzte starre Anschläge für eine geschlossene und eine geöffnete Position der Brillenbügel an der Brillenfassung dienen. Als Nachteil ist bei dieser bekannten Ausführung anzusehen, daß die Brillenbügel über die vorgegebenen starren Anschläge hinaus nicht elastisch gespreizt werden können, ohne daß dadurch die Brillenbügel abbrechen würden.

Der Erfindung liegt die Aufgabe zugrunde, ein Kreuzfedergelenk der eingangs genannten Art zu schaffen, welches in der Lage ist, den Brillenbügeln eine angemessene Elastizität zu verleihen, sei es bei der Ausspreizung über die Schläfen, sei es beim Öffnen oder beim Schließen der Brillenbügel und darüber hinaus eine bessere Halterung der Brillen an den Schläfen zu gewährleisten sowie den Vorgang des Öffnens und Schließens der Bügel in der Ruhestellung zu erleichtern.

Diese Aufgabe wird durch die kennzeichnenden Merkmale im Patentanspruch gelöst.

Vorteilhafte Weiterentwicklungen sind in den abhängigen Ansprüchen gekennzeichnet.

Es zeigen
Fig. 1 eine Seitenansicht eines erfindungsgemäßen Kreuzfedergelenks zwischen Brillenbügel und Brillenfassung;
Fig. 2 eine Teilansicht einer Brillenfassung von außen mit einem erfindungsgemäßen Kreuzfedergelenk;
Fig. 3 einen Schnitt längs der Achse III - III der
Fig. 4, und zwar einen Teil des in Fig. 1 schematisch dargestellten Kreuzfedergelenkes;

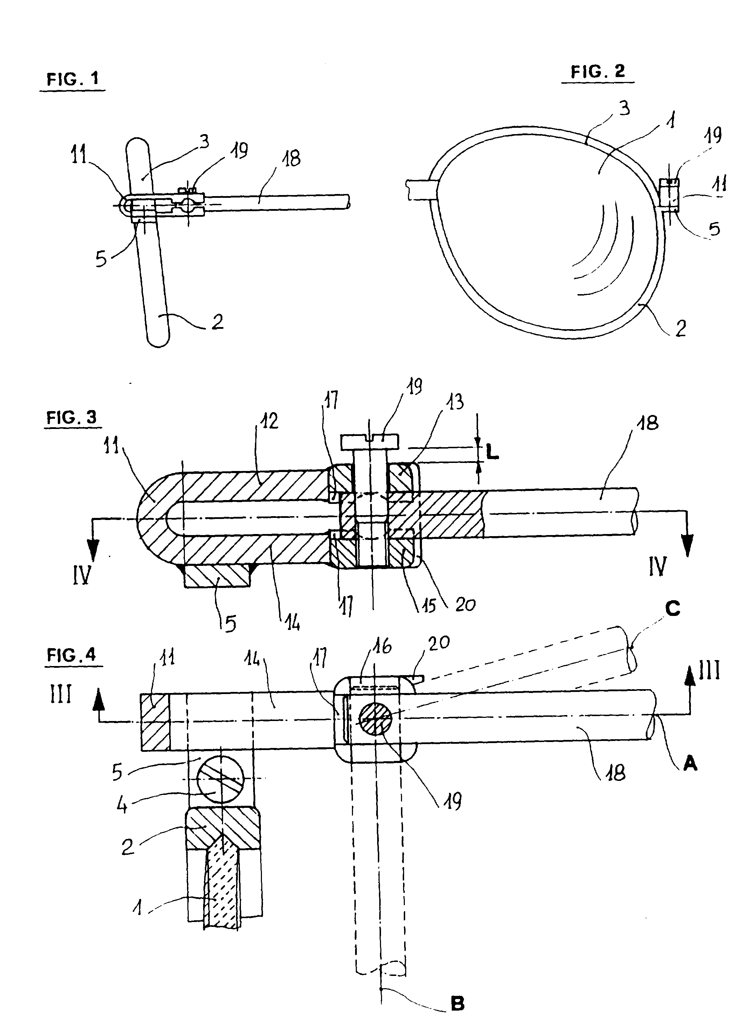

Fig. 4 eine Draufsicht längs der Achse IV - IV der Fig. 3;

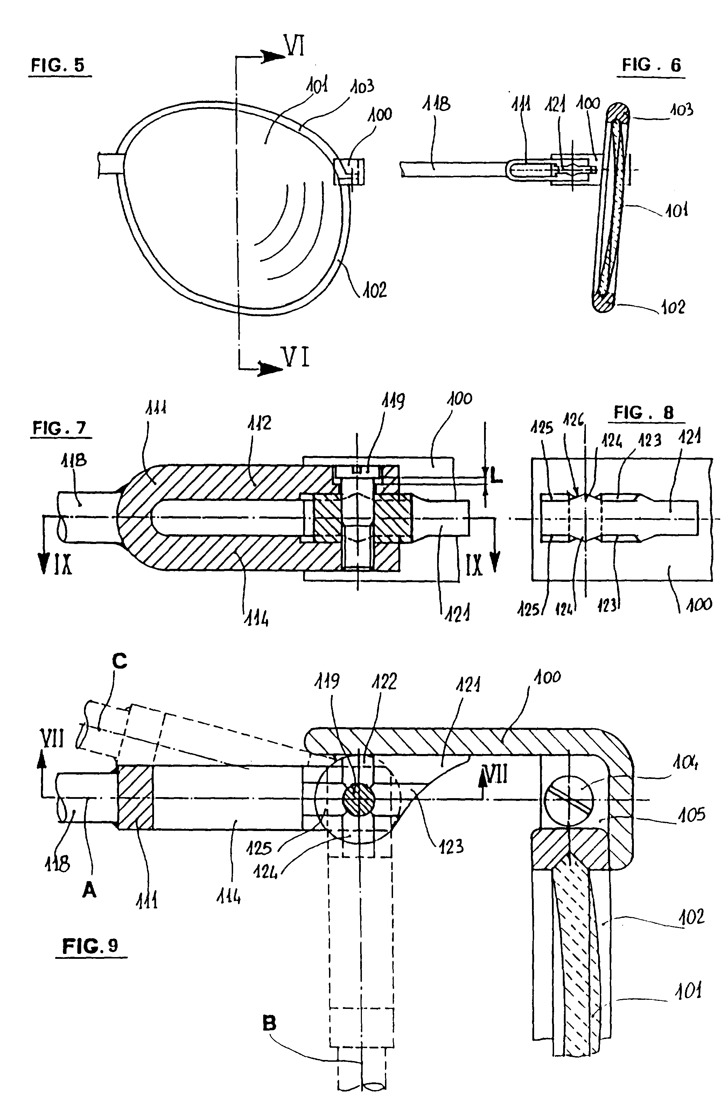

Figuren 5 bis 9 eine erste Variante der erfindungsgemäßen konstruktiven Lösung für das Kreuzfedergelenk, und zwar:
   Fig.5 eine äußere Vorderansicht einer Brillenfassung;
   Fig. 6 einen Schnitt längs der Achse VI - VI der Fig. 5;
   Fig. 7 einen Schnitt längs der Achse VII - VII der Fig. 9 der in Fig. 6 schematisch dargestellten Brillenfassung mit Kreuzfedergelenk;
   Fig. 8 eine Ansicht des Verbindungsteiles zwischen Kreuzfedergelenk und Brillenfassung, ohne den ins Gelenk einzufügenden Bügelteil;
   Fig. 9 eine Draufsicht längs der Achse VII - VII der Fig. 9 des Kreuzfedergelenkteiles.

In den Figuren sind die gleichen Teile mit den gleichen Bezugszeichen versehen.

Teil 1 stellt ein Brillenglas dar, welches von einem Fassungsunterteil 2 gehalten und von einem Fassungsoberteil 3 durch eine Schraube 4 zusammengehalten wird, welche zwei Plättchen 5 gemäß dem Stand der Technik verbindet.

An einem der Plättchen 5 ist eine Gabelfeder 11 befestigt, welche entsprechend mit der Brillenfassung, die aus den beiden Fassungsbögen 2 und 3 besteht, fest verbunden ist.

Am oberen Gabelende 12 der Gabelfeder 11 wird ein Plättchen 13 angeschweißt oder sonstwie angebracht, welches eine durchgehgende Bohrung aufweist, während am unteren Gabelende 14 ein Plättchen 15 befestigt wird, welches ein koaxial mit der oben genannten Bohrung fluchtendes Gewindeloch aufweist.

Die inneren gegenseitigen Flächen der Plättchen 13 und 15 weisen Nuten 16 und 17 auf, welche rechtwinklig zueinander stehen und derart geformt sind, daß sie das Bügel ende 18 aufnehmen können.

Der Bügel 18 wird zwischen den Plättchen 13 und 15 gehalten, weil er sehr gut in die Sitze der Nutenpaare 17 oder 16 eingefügt werden kann, und wird hierbei durch eine Schraube 19 festgehalten, welche durch die Bohrung des oberen Plättchens 13 und die am Bügel 18 zweckmäßig angebrachte Bohrung hindurchgesteckt und in das Gewindeloch des unteren Plättchens 15 eingeschraubt wird.

Die Schraube 19 muß zwischen dem Schraubkopfboden und dem oberen Plättchen 13 ein Spiel L aufweisen, um die vertikale Bewegung des oberen Plättchens 13 zu ermöglichen, wenn es elastisch beansprucht wird. Dieses Spiel L wird vorteilhafterweise einen Wert aufweisen, welcher der Tiefe der Nuten oder Einschnitte 16 und 17 entspricht.

Aus den Figuren 3 und 4 ist klar ersichtlich, daß der Bügel 18 sich von einer offenen Stellung A in eine geschlossene Stellung B bewegen kann, indem er sich, unter geeignetem Druck, um die Schraube 19 als Drehzapfen dreht, und sich auf diese Weise in eine Ruhestellung begibt. In der Tat wird durch die Lagerung des Bügels 18 im Nutpaar 16, gebildet durch die einander gegenüberliegenden Flächen der Plättchen 13 und 15, die Schließstellung B erreicht, während die Lagerung im Nutpaar 17 die normale offene Stellung ermöglicht.

Beim Durchgang von der Stellung A zur Stellung B muß der Bügel 18 die Distanz zwischen den einander gegenüberliegenden Flächen der Plättchen 13 und 15 erweitern, damit seine Dickenabmessung hindurchgelangen kann.

Die Spreizung der Plättchen 13 und 15, welche durch das Spiel L ermöglicht wird, drückt auch das obere Gabelende 12 und das untere Gabelende 14 des elastischen Elements 11 auseinander. Diese Spreizung endet sobald der Bügel 18 sich in der Position B befindet, also innerhalb des Nutpaares 16.

Aus dem bisher Beschriebenen geht hervor, daß das elastische Element 11 die Aufgabe hat, das Herausgleiten des Bügels 18 aus seinem Sitz in der Nut 17 in der offenen Stellung oder in seinem Sitz in der Nut 16 der geschlossenen Stellung zu verhindern, indem es einen angemessenen Druck ausübt, um das Wiedereingleiten beim Übergang von einer in die andere Nut zu erleichtern.

Außer dem Einschnappen beim Öffnen und beim Schließen begünstigt die beschriebene Vorrichtung auch den Druck auf die Schläfen beim Gebrauch der Brille mit offenstehenden Bügeln. Eine Stellung C der Fig. 4 zeigt die maximal vom Kreuzfedergelenk ermöglichte Spreizung, die von einer Lasche 20 begrenzt ist.

In der Stellung C ist der Bügel 18 aus der Nut 17 herausbewegt, so daß auch die Plättchen 13 und 15 gespreizt sind. Folglich bewirkt das elastische Element 11 beim Loslassen die Rückkehr des Bügels 18 in den Sitz der Nut 17. Auf diese Weise bewirkt das elastische Element auch einen angemessenen Druck auf den Bügel 18, der sich an die Schläfe andrückt und so den bestmöglichen Sitz der Brille gewährleistet.

Gemäß dem bisher Beschriebenen und Gezeigten, wird ein federndes Gelenk für Brillen geschaffen, das dadurch gekennzeichnet ist, daß das elastische Element 11 an keine kleinen Abmaße von Gehäusen, Führungen usw. gebunden ist, sondern in jeder Größe hergestellt werden kann, wobei die den Brillenbügeln eigene ästhetische Ausgestaltungen voll ausgenutzt werden können und wobei die Federwirkung wirkungsvoll und dauerhaft gewährleistet wird.

Das beschriebene Gelenk ist in der einfachsten Form ausgebildet, indem viele der bekannten notwendigen Teile von ähnlichen Gelenken nicht verwendet worden sind, wobei die Festigkeit der wenigen notwendigen Teile gewährleistet ist. Außerdem sind die entsprechenden Herstellungszeiten und -kosten herabgesetzt, und es wird ein einfacher Zusammenbau und eine leichte Auswechselbarkeit der Bügel erreicht, gemäß einer weiteren zu lösenden Aufgabe.

Die bisher beschriebene konstruktive Lösung bezieht sich auf die Anordnung der Gabelfeder 11 an der Fassung der Brille, so daß sie mit der Fassung fest verbunden ist, und auf den Bügel 18, der drehbar zwischen die Nuten 17 und 16 eingesetzt ist.

Die erste Variante der bisher beschriebenen konstruktiven Lösung ist in den Figuren 5 bis 9 dargestellt und bezieht sich auf die feste Anordnung einer Gabel feder 111 auf den Bügel 118, der um den Gelenkstift 119 dreht.

Die gleiche Variante bezieht sich auch auf eine unterschiedliche Form der Sitze der Nuten 16 und 17, die nachstehend in einer Form von schiefen Ebenen beschrieben wird, wie sie auch auf die bereits beschriebenen Nutsitze 16 und 17 angewandt werden können.

In den Figuren 5 bis 9 sind die gleichen bereits in den Zeichnungen der Figuren 1 bis 4 beschriebenen Teile mit den gleichen Bezugszeichen bezeichnet, die jedoch des besseren Verständnisses wegen, um 100 erhöht worden sind.

Auf einem die Brillenfassungsbögen 102 und 103 verbindenden Plättchen 105 ist zur Befestigung der Linse 101 der Winkel 100 angeschweißt oder sonstwie befestigt, welcher geeignet ist, ein Gelenkmittelteil 121 aufzunehmen. Wie aus den Figuren 8 und 9 ersichtlich wird, ist das Gelenkmittelteil 121 mit dem Winkel 100 fest verbunden und besteht aus einem teilweise rund geformten Flachteil mit den beiden Gelenkaufliegeflächen, welche Zahnungen 122, 123, 124 und 125 mit schrägen Zahnflächen aufweisen, die rechtwinklig zueinander und koaxial zu einer zentralen Bohrung 126 angeordnet sind.

Die Bohrung 126 nimmt die Gelenkschraube 119 auf, nachdem die Schraube 119 durch das obere Gabelende 112 geführt und in das koaxiale Gewindeloch des unteren Gabelendes 114 einer Gabelfeder 111 eingeschraubt worden ist.

Diese Gabelenden 112 und 114 oder ihre daran befestigten Plättchen sind nicht nur durchborht, sondern haben auch Nuten, die rechtwinklig und koaxial zur Bohrung angeordnet sind, deren Tiefe und Schräge gleiche Werte aufweisen wie die Zähne 122, 123, 124 und 125.

Beim Einschrauben der Gelenkschraube 119 auf das untere Gabelende 114 muß ein Spiel L vorgesehen werden, dessen Maß etwa demjenigen der Höhe der Zähne von 122 bis 125 entspricht.

An das elastische Element, bzw. Gabelfeder 111, wird das Bügelende 118 angeschweißt oder sonstwie befestigt, das sich demgemäß bewegt und mit der Gabelfeder 111 eine Einheit bildet.

Aus der Figur 9 wird ersichtlich, daß für die Bewegung des Brillenbügels aus der offenen Stellung A in die geschlossene Stellung B eine Rotation der Gabelenden 112 und 114 auf den schrägen Flächen der Zähne 122, 123, 124 und 125 erforderlich ist.

Bei dieser Rotation gleiten die schrägen Flächen des Gelenkmittelteiles 121 auf den entsprechenden Sitzen der Gabelenden 112 und 114 bis zu ihrem erneuten Einschnappen in den nächsten Sitz bei einer Rotation des Bügels 118 um 90°, also bei seinem Stellungswechsel von der Stellung A durch Einschnappen in die Stellung B, welches durch die elastische Wirkung der Gabelfeder 111 ermöglicht wird.

Auch im Falle einer weiteren Spreizung zur Stellung C, z. B. beim Anlegen der Brillenbügel an die Schläfen, erfolgt ein teilweises Gleiten der schrägen Flächen der Zähne 122, 123, 124 und 125 auf den entsprechenden Sitzen an den Gabelenden 112 und 114 und es erfolgt auch durch die Spreizung der Gabelenden 112 und 114 ein Reaktionsdruck an die Schläfen, um einen bestmöglichen Sitz der Brille in der Gebrauchsstellung zu gewährleisten.

Die maximal mögliche Spreizung des Bügels 118 wird durch den Anschlag des Winkels 100 begrenzt.

Die beiden vorgeschlagenen konstruktiven Lösungen, d. h. mit der an der Brillenfassung festgemachten Gabelfeder 11 oder 111, welches an dem an der Fassung gelenkig anzubringenden Bügel 118 befestigt ist, hat man die Möglichkeit, eine Gabelfeder anzuwenden, welche angemessene Abmaße hat und eine dauerhafte elastische Beanspruchung gewährleistet, ohne in ihrer Größe an Gehäusen, Sitze oder Führungen gebunden zu sein, in denen sie angeordnet werden muß, gemäß einer weiteren Aufgabe der Erfindung.

Bei beiden konstruktiven Lösungen erreicht man eine äußerste Verminderung der Anzahl der für das Gelenk notwendigen Teile, und zwar bei einer ausreichenden Robustheit und bei einem erleichterten Zusammenbau und Auswechselbarkeit gemäß einer weiteren Aufgabe der Erfindung.

Es ist klar, daß die in den Figuren 1 bis 4 vorgeschlagene konstruktive Lösung und ihre erste konstruktive Variante gemäß den Figuren 5 bis 9 noch weiterhin abgeändert und an spezifische Situationen angepaßt werden können. Als Beispiel soll die Möglichkeit angeführt werden, daß die Lage der Zähne 122, 123, 124 und 125 umgekehrt werden kann, so daß sie in den Erhebungen (im Relief) auf den Innenflächen der Gabeln 112 und 114 oder auf ihren angeschweißten Plättchen zu stehen kommen, mit der entsprechenden Nut auf dem Gelenkmittelteil 121. Es ist weiterhin möglich, beispielsweise die Kreuznuten als einfache Winkelnuten zu gestalten, indem der Teil hinter dem Gelenkstift 19 weggelassen wird. Es ist auch noch möglich, das elastische Element für Metallfassungen, sowie für Fassungen aus Kunststoff zu verwenden, indem man es entsprechend anpaßt, und zwar auch in ästhetischer Hinsicht. Diese und andere ähnliche Änderungen oder Anpassungen verstehen sich in jedem Falle als zur ursprünglichen Erfindung gehörend, die geschützt werden soll.

## Patentansprüche

1. Kreuzfedergelenk für Brillenbügel mit einer Gabelfeder und einem Gelenkstift, wobei
a) die Gabelfeder (11) an den Innenflächen ihrer Gabelenden (12, 14) oder an diesen angeordneten Plättchen (13, 15) Zahnungen oder Nuten (16, 17) aufweist oder aufweisen, wobei diese rechtwinklig zueinander und koaxial zu der Achse des Gelenkstiftes (19) der Gabelenden (12, 14) stehen,
b) der Brillenbügel (18) zwischen die Gabelenden (12, 14) eingefügt und in den Nuten (16, 17) gelagert ist, wobei der Brillenbügel (18) um den Gelenkstift (19) drehbar ist, so daß die Lagerung des Brillenbügels von der Nut (17) zu der zu ihr rechtwinklig stehenden nächster Nut (16) veränderbar ist, und
c) die Gabelenden (12, 14) spreizbar ausgebildet sind, um eine weitere Rotation des Brillenbügels (18) zu ermöglichen, wobei die Gabelenden die Veränderung der Lagerung des Brillenbügels (18) in eine der Nuten 16, 17) erleichtern, in dem sie einen angemessenen Druck auf den Brillenbügel (18) in der Zwischenphase von einer Nut zur anderen ausüben.

2. Kreuzfedergelenk nach Anspruch 1, dadurch gekennzeichnet, daß das Gelenk aus der Gabelfeder (11) besteht, an die an einem der Gabelenden (12 oder 14) ein Ansatzstück (5) zur Befestigung an eine Brillenfassung (2) angeordnet ist, wobei die inneren einander gegenüberliegenden Flächen der Gabelenden (12, 14) oder an diesen angeordneten Plättchen (13, 15) Nuten (16, 17) aufweisen, die zueinander rechtwinklig und konzentrisch zu der Achse eines Gelenkstiftes oder Schraube (19) stehen, die durch eine in den Gabelenden (12, 14) angeordnete Bohrung steckbar ist, wobei die Achse der Schraube (19) entsprechend den Gleitflächen der Nuten (16, 17) ausgerichtet ist.

3. Kreuzfedergelenk nach Anspruch 2, dadurch gekennzeichnet, daß zwischen den Innenseiten der Gabelenden (12, 14) des elastischen Elements (11) oder zwischen den gleichen inneren Flächen der an diesen angeordneten Plättchen (13, 15) ein Ende des Brillenbügels (18) einsteckbar ist, wobei der Brillenbügel (18) eine Dicke aufweist und in einer der Nuten (16, 17) derart lagerbar ist, daß an seinem Bügelende koaxial zu den an den Gabelenden (12, 14) angeordneten Bohrungen eine entsprechende Bohrung vorgesehen ist, die den Gelenkstift oder die Schraube (19) aufnimmt, die durch die gleichen Bohrungen der Gabelenden steckbar und in einem in dem unteren Gabelende (14) vorgesehenen Gewindeloch einschraubbar ist, oder in eine nachträglich angeordnete Mutter, so daß der Brillenbügel (18) gelenkig festgelegt ist.

4. Kreuzfedergelenk nach den Ansprüchen 2 und 3, dadurcn gekennzeichnet, daß der mittels der Schrauben (19) gelenkig angeordnete und in einer der Nuten (16, 17) eingelegte Brillenbügel (18) sich in die nächstliegende, rechtwinklig dazu stehende Nut (17 oder 16) drehbar einlegen läßt, und daß ein Anschlag (20) vorgesehen ist, bis zu dem der Brillenbügel begrenzt weiter drehbar ist, wobei er in dieser Rotationsphase eine Spreizung der Gabelenden (12, 14) oder seiner daran befestigten Plättchen (13, 15) bewirkt und zwar durch die Wirkung seiner Dicke auf die gegenüberliegenden inneren Flächen der Gabelenden (12, 14), wodurch die Gabelfeder (11) kraftmäßig belastet wird.

5. Kreuzfedergelenk nach den Ansprüchen 2 bis 4, dadurch gekennzeichnet, daß durch die Beanspruchung der Gabelfeder (11) ein Druck über die Gabelenden (12, 14) auf das Bügelende (18) ausgeübt wird, so daß es in der nächstliegenden Nut einrastet, wobei ein Auf- oder Zuschnappen der Bügel (18) auf die Brille ermöglicht und ein angemessener Druck der Bügel an die Schläfen bereitgestellt wird, was zu einem guten Sitz der Brille am Kopf führt.

6. Kreuzfedergelenk nach Anspruch 1, dadurch gekennzeichnet, daß das Gelenk aus der Gabelfeder (111) besteht, die an einem Bügelende (118) angeordnet und in den Gabelenden (112, 114) oder in an diese befestigten Endplättchen mittels des Gelenkstiftes (119) drehbar gelagert und der Stift durch ein Gelenkmittelteil (121) hindurchsteckbar ist, das mittels eines Winkels (199) oder einer Befestigungslasche an der Brillenfassung befestigt wird.

7. Kreuzfedergelenk nach Anspruch 6, dadurch gekennzeichnet, daß das Gelenkmittelteil (121) aus einem Flachteil besteht, das teilweise kreisförmig ausgebildet ist, dessen Oberfläche mit den Innenflächen der Gabelenden (112 und 114) in Kontakt steht, die mit Schrägzahnungen (122, 123, 124 und 125) versehen sind und die rechtwinklig zueinander und koaxial zu einer zentralen Bohrung stehen, wobei die Bohrung (126) mit der Normalachse der Gleitbahn der Zahnoberfläche fluchtet.

8. Kreuzfedergelenk nach den Ansprüchen 6 und 7, dadurch gekennzeichnet, daß die einander gegenüberliegend angeordneten Oberflächen der Gabelenden (112 und 114) oder der an diesen angeordneten Endplättchen Schrägwandzahnungen aufweisen, welche als Negativ zu den Schrägwandzähnen auf dem Gelenkmittelteil (121) angeordnet sind, so daß sie gegenseitig zwischen den Gabelenden (112 und 114) mit dem Gabelmittelteil (121) einrasten, wobei diese Teile miteinander durch den Gelenkstift (119) verbunden sind und ein ausreichenes Spiel (L) aufrechterhalten.

9. Kreuzfedergelenk nach Anspruch 8, dadurch gekennzeichnet, daß bei einer Drehung des Bügels (118) mit der Gabelfeder (111) um den Gelenkstift (119) die schrägen Flächen zwischen den Zähnen (122, 123, 124 und 125) des Gelenkmittelteils (121) auf den mit diesen korrespondierenden gegenteiligen Kerbflächen gleiten, welche sich auf den Gabelenden (112, 114) befinden, wodurch die Spreizung der Gabelenden (112, 114) und die elastische Beanspruchung der Gabelfeder (111) erfolgt.

10. Kreuzfedergelenk nach den Ansprüchen 6 bis 9, dadurch gekennzeichnet, daß die elastische Beanspruchung der Gabelfeder (111) die Gabelenden (112, 114) gegen die schrägen Flächen der Zähne (122, 123, 124 und 125) drückt, um diese in die ihnen vorbestimmten Sitze einrücken zu lassen, wodurch die Schnappbewegung beim Öffnen und Schließen der Bügel (118) an der Brille und mit einem ausreichenden Druck der Bügel an die Schläfen erfolgt, um einen guten Sitz der Brille am Kopf zu gewährleisten.

11. Kreuzfedergelenk nach den Ansprüchen 1, 2 und 6, dadurch gekennzeichnet, daß der Gelenkstift (19 oder 119) an dem Gabelende (14 oder 114) und/oder an einer Distanzmutter angeordnet ist, wobei der Gelenkstift zwischen der Distanzmutter und dem oberen Plättchen (13) oder zwischen dem Gabelende (112) ein Spiel (L) aufweist, dessen Größe vorzugsweise der Tiefe der Nuten (16, 17) und/oder der Höhe der Zähne mit den schrägen Zahnflächen (122, 123, 124 und 125) entspricht, welche die beweglichen Kreuzeingriffe darstellen, und zwar zwischen den Gabelenden (12, 14 oder 112, 114) und dem Gelenkmittel (18 oder 121), das mit der Zahnung die offene oder geschlossene Position und die Spreizung der Brillenbügel auf der Brillenfassung ergibt.

## Claims

1. Flexural pivot for side pieces of spectacles with a fork spring and a joint pin, wherein
a) the fork spring (11) has teeth (122, 123, 124, 125) or grooves (16, 17) at the internal surfaces of its fork ends (12, 14) or at small plates (13, 15) being disposed thereat, which are arranged rectangular to each other and coaxial to an axis of a joint pin (19) of the fork ends (12, 14),
b) the spectacles side piece (18) being inserted between the fork ends (12, 14) and rested in the grooves (16, 17), wherein the spectacles side piece (18) can be rotated around the joint pin (19) so that the seating of the spectacles side piece is changeable from the groove (17) to the next groove (16) being rectangular to the previous, and
c) the fork ends (12, 14) are formed spreadable to permit a further rotation of the spectacles side piece (18), wherein the fork ends relieve the change of the seating of the spectacles side piece (18) in one of the grooves (16, 17) by exerting an adequate pressure on the spectacles side piece (18) in the intermediate phase from one groove to another.

2. Flexural pivot according to Claim 1, characterized in that the joint consists of the fork spring (11) at which a linking piece (5) for mounting on a spectacles frame (2) is disposed at one of the fork ends (12 or 14), wherein the opposed internal surfaces of the fork ends (12, 14), or small plates (13, 15) being disposed on these ends, have grooves (16, 17) which are arranged rectangular to each other and concentric to the axis of a joint pin or screw (19) which is insertable in a bore-hole being disposed in the fork ends (12, 14), wherein the axis of the screw (19) is aligned corresponding to the slide planes of the grooves (16, 17).

3. Flexural pivot according to Claim 2, characterized in that between the internal surfaces of the fork ends (12, 14) of the elastic element (11), or between the same internal surfaces of the small plates (13, 15) being disposed on these ends, an end of the spectacles side piece (18) is insertable, wherein the spectacles side piece (18) has a width and is reposable in one of the grooves (16, 17) in such a manner, that at its spectacles side piece end, arranged coaxial to the bore-holes at the fork ends (12, 14), a corresponding bore-hole is provided taking up the joint pin or the screw (19), which is insertable through the same bore-holes of the fork ends and which is screwable in a threaded hole being provided in the lower fork end (14) or in a subsequent disposed nut, so that the spectacles side piece (18) is pivotally fixed.

4. Flexural pivot according to Claims 2 and 3,
characterized in that the spectacles side-piece (18), which is pivotally disposed by the screws (19) and engaged in one of the grooves (16, 17), can be pivotally engaged into the next rectangular disposed groove (17 or 16), and that a stop (20) is provided to which the side piece can be rotated further within limits, causing during this rotary phase a straddling of the fork ends (12, 14) or small plates (13, 15) being fixed to these ends, and that by the action of its width on the opposed internal surfaces of the fork ends (12, 14), whereby the fork spring (11) is stressed.

5. Flexural pivot according to Claims 2 to 4,
characterized in that a pressure is exerted by the stress on the fork spring (11) over the fork ends (12, 14) on the end of the spectacles side piece (18), so that it snaps into the next groove, whereby a flying open or snapping of the side pieces (18) on the spectacles is made possible and an adequate pressure of the side pieces on the temples is provided, which leads to a good fit of the spectacles on the head.

6. Flexural pivot according to Claim 1, characterized in that the joint consists of a fork spring (111) which is disposed at an end of a spectacles side piece (118) and is pivotally supported in the fork ends (112, 114) or in end plates fixed to these ends by a pin (119) which is insertable through a central joint part (121) which is fixed by an angle piece (100) or mounting tongue to the spectacles frame.

7. Flexural pivot according to Claim 6, characterized in that the central joint part (121) consists of a flat part that is partially circular shaped and whose surface is in contact with internal surfaces of the fork ends (112 and 114) which are provided with slanting teeth (122, 123, 124 and 125) and arranged rectangular to each other and coaxial to a central bore-hole, wherein the bore-hole (126) is aligned to the normal axis of the sliding level of the tooth surface.

8. Flexural pivot according to Claims 6 and 7,
characterized in that the opposed surfaces of the fork ends (112 and 114) or their end plates, being disposed on these ends, have slanting wall teeth which are disposed as negative with respect to the slanting wall teeth on the central part of the joint (121), so that they mutually catch with the central part of the joint (121) between the fork ends (112 and 114), wherein these parts are linked with each other by the joint pin (119), and maintain a sufficient backlash (L).

9. Flexural pivot according to Claim 8, characterized in that during a rotation of the spectacles side-piece (118) with the fork spring (111) around the joint pin (119) the slanting surfaces between the teeth (122, 123, 124 and 125) of the central part of the joint (121) glide on the corresponding opposed groove surfaces, which are disposed on the fork ends (122, 114), whereby the straddling of the fork ends (112, 114) and the elastic stress of the fork spring (111) takes place.

10. Flexural pivot according to Claims 6 to 9,
characterized in that the elastic stress of the fork spring (111) pushes the fork ends (112, 114) towards the slanting surfaces of the teeth (122, 123, 124 and 125) to let them engage in their predetermined seats, whereby the snapping motion takes place when the spectacles side pieces (118) are opened and closed on the spectacles and with an adequate pressure of the spectacles side pieces on the temples to assure a good fit of the spectacles on the head.

11. Flexural pivot according to Claims 1, 2 and 6, characterized in that the joint pin (19 or 119) is disposed at the fork end (14 or 114) and/or at a spacer nut, wherein the joint pin has a backlash (L) between the spacer nut and the upper plate (13) or between the fork end (112) whose value preferably corresponds to the height of the teeth with the slanting tooth surfaces (122, 123, 124 and 125) and/or grooves (16, 17), which represent the movable cross-mesh, and that between the fork ends (12, 14 or 112, 114) and the central part of the joint (18 or 121) that provides with the teeth the opened or closed position and the straddling of the spectacles side pieces on the spectacles frame.

## Revendications

1. Articulation à lame flexible pour branches de lunettes comportant un ressort en forme de fourche et une un axe d'articulation, dans lequel
a) le ressort en forme de fourche (11) comporte, sur les surfaces intérieures des extrémités (12, 14) de la fourche ou au niveau de plaquettes (13, 15) disposées sur ces extrémités, des nervures ou des rainures (16, 17), ces nervures ou rainures étant perpendiculaires entre elles et coaxiales à l'axe de la tige d'articulation (19) des extrémités (12, 14) de la fourche,
b) la branche de lunettes (18) est insérée entre les extrémités (12, 14) de la fourche et est logée dans les rainures (16, 17), la branche de lunettes (18) pouvant tourner autour de la tige d'articulation (19) de telle sorte que le soutien de la branche de lunettes peut être modifié de la rainure (17) à la rainure immédiatement suivante (16) qui est perpendiculaire à la précédente, et
c) les extrémités (12, 14) de la fourche sont agencées de manière à pouvoir être écartées pour permettre une rotation supplémentaire de la branche de lunettes (18), les extrémités de la fourche facilitant la modification de la position de la branche de lunettes (18) dans l'une des rainures (16, 17), par le fait qu'elles exercent une pression appropriée sur la branche de lunettes (18) pendant la phase intermédiaire de passage d'une rainure à l'autre.

2. Articulation à lame flexible selon la revendication 1, caractérisée en ce que l'articulation est constituée par le ressort en forme de fourche (11), sur l'une des extrémités (12 ou 14) de la fourche duquel est disposé une partie saillante (5) pour la fixation sur une monture de lunettes (2), les surfaces intérieures, qui se font face, des extrémités (12, 14) de la fourche ou des plaquettes (13, 15) disposées sur ces extrémités comportant des rainures (16, 17), qui sont perpendiculaires entre elles et concentriques à l'axe d'une tige d'articulation ou d'une vis (19), qui peut être enfichée dans un perçage aménagé dans les extrémités (12, 14) de la fourche, l'axe de la vis (19) étant orienté conformément aux surfaces de glissement des rainures (16, 17).

3. Articulation à lame flexible selon la revendication 2, caractérisée en ce qu'une extrémité de la branche de lunettes (18) peut être enfichée entre les surfaces intérieures des extrémités (12, 14) de
l'élément élastique (11) ou entre les surfaces intérieures identiques des plaquettes (13, 15) disposées sur ces surfaces, la branche de lunettes (18) possédant une épaisseur et pouvant être logée dans l'une des rainures (16, 17) de telle sorte que dans une extrémité de la branche est prévu, coaxialement aux perçages aménagés dans les extrémités (12, 14) de la fourche, un perçage correspondant qui loge la tige d'articulation ou la vis (19), qui peut être enfichée dans les perçages identiques des extrémités de la fourche et peut être vissée dans un trou taraudé prévu dans l'extrémité inférieure (14) de la fourche, ou bien dans un écrou mis en place ultérieurement, de sorte que la branche de lunettes (18) est fixée de façon articulée.

4. Articulation à lame flexible selon les revendications 2 et 3, caractérisée en ce que la branche de lunettes (18) qui est montée de façon articulée à l'aide de la vis (19) et est insérée dans l'une des rainures (16, 17), peut être introduite, avec une rotation possible, dans la rainure immédiatement suivante (17 ou 16), perpendiculaire à la rainure précédente et qu'il est prévu une butée (20), jusqu'à laquelle on peut continuer à faire tourner d'une manière limitée la branche de lunettes, auquel cas pendant cette phase de rotation, la butée provoque un écartement des extrémités (12, 14) de la fourche ou des plaquettes (13, 15) fixées sur ces extrémités, et ce grâce à l'action qu'a son épaisseur sur les surfaces intérieures, situées en vis-à-vis, des extrémités (12, 14) de la fourche, l'action par laquelle le ressort (11) en forme de fourche est sollicité par une force.

5. Articulation à lame flexible selon les revendications 1 à 4, caractérisée en ce que sous l'effet de la contrainte du ressort (11) en forme de fourche, une pression est appliquée par l'intermédiaire des extrémités (12, 14) de la fourche à l'extrémité (18.) de la branche de sorte que cette dernière s'encliquette dans la rainure immédiatement suivante, auquel cas il est possible de réaliser un montage ou une fermeture par encliquetage de la branche (18) sur les lunettes et on obtient un serrage adéquat des branches contre les tempes, ce qui conduit à un bon appui des lunettes sur la tête.

6. Articulation à lame flexible selon la revendication 1, caractérisée en ce que l'articulation est constituée par le ressort en forme de fourche (111), qui est disposé sur une extrémité (118) de la branche et est monté de manière à pouvoir tourner dans les extrémités (112, 114) de la fourche ou dans des plaquettes d'extrémité, fixées à ces extrémités, au moyen de la tige d'articulation (119), et la tige peut être enfichée dans une partie médiane d'articulation (121), qui est fixée à la monture de lunettes au moyen d'une cornière (100) ou d'une patte de fixation.

7. Articulation à lame flexible selon la revendication 6, caractérisée en ce que la partie centrale (121) est constituée par une partie plate, qui est réalisée avec une forme partiellement circulaire et dont la surface est en contact avec les surfaces internes des extrémités (112 et 114) de la fourche, qui sont pourvues de dents obliques (122, 123, 124 et 125) et qui sont perpendiculaires entre elles et coaxiales à un perçage central, le perçage (126) étant aligné avec l'axe normal de trajectoire de glissement de la surface des dents.

8. Articulation à lame flexible selon les revendications 6 et 7, caractérisée en ce que les surfaces, qui sont disposées réciproquement en vis-à-vis, des extrémités (112 et 114) de la fourche ou des plaquettes d'extrémité, disposées sur ces extrémités comportent des dentures à parois obliques, qui sont disposées en tant qu'éléments à profils complémentaires des dents des parois obliques, sur la partie centrale (121) d'articulation de sorte qu'elle s'encliquettent réciproquement entre les extrémités (112 et 114) de la fourche, avec la partie centrale (121) d'articulation, ces parties étant reliés entre elles par la tige d'articulation (119) et maintenant un jeu suffisant (L).

9. Articulation à lame flexible selon la revendication 8, caractérisée en ce que lors d'une rotation de la branche (118) équipée d'un ressort en forme de fourche (111) autour de l'axe d'articulation (119), les surfaces obliques glissent entre les dents (122, 123, 124 et 125) de la partie centrale (121) de l'articulation, sur les surfaces d'encoche antagonistes, qui correspondent à ces dents et qui sont situées sur les extrémités (112, 114) de la fourche, ce qui provoque l'écartement des extrémités (112, 114) de la fourche et la contrainte élastique du ressort en forme de fourche (111).

10. Articulation à lame flexible selon les revendications 6 à 9, caractérisée en ce que la contrainte élastique du ressort en forme de fourche (111) repousse les extrémités (112, 114) de la fourche contre les surfaces obliques des dents (122, 123, 124 et 125), pour amener ces dernières à s'engager dans les sièges qui leur sont prédestinés, ce qui a pour effet que le mouvement d'encliquetage s'effectue lors de l'ouverture et de la fermeture des branches (118) sur les lunettes et avec une pression suffisante des branches contre les tempes, pour garantir un bon appui des lunettes sur la tête.

11. Articulation à lame flexible selon les revendications 1, 2 et 6, caractérisée en ce que l'axe d'articulation (19 ou 119) est disposée sur l'extrémité (14 ou 114) de la fourche et/ou sur un écrou d'entretoisement, la tige d'articulation possédant, entre l'écrou d'entretoisement et la plaquette supérieure (13) ou l'extrémité (112) de la fourche, un jeu (L), dont la taille correspond de préférence à la profondeur des rainures (16, 17) et/ou à la hauteur des dents pourvues de surfaces obliques (122, 123, 124 et 125), qui représentent les engrènements mobiles en croix, et ce entre les extrémités (12, 14 ou 112, 114) de la fourche et le moyen d'articulation (18 ou 121) qui, avec les nervures, définit la position ouverte ou fermée et l'écartement des branches de lunettes sur la monture de lunettes.
